# EUROPÄISCHE PATENTSCHRIFT

(11) **EP 2 807 963 B1**
(45) Veröffentlichungstag und Bekanntmachung des Hinweises auf die Patenterteilung: **17.06.2015**
(21) Anmeldenummer: 14002938.0
(22) Anmeldetag: 06.07.2012
(51) Int. Cl.: A47J 31/46, A47J 31/36, A47J 31/44

(54) **Espressokaffeemaschine mit einer Brüheinheit**
Espresso coffee machine with a brewing unit
Machine à café expresso avec une unité d'infusion

(30) Priorität: 11.07.2011 DE 202011103272 U
(43) Veröffentlichungstag der Anmeldung: 03.12.2014
(62) Teilanmeldung aus: 12005019.0
(73) Patentinhaber: Eugster/Frismag AG, 8580 Amriswil (CH)
(72) Erfinder: Fischer, Daniel, 8590 Romanshorn (CH); Brendle, Christian, 8586 Erlen (CH)
(74) Vertreter: Schubert, Siegmar

(56) Entgegenhaltungen:
- EP-A1- 1 308 115
- WO-A1-2007/060694
- WO-A1-2011/045710

## Beschreibung

Die Erfindung betrifft eine Espressokaffeemaschine mit einer Brüheinheit nach dem Oberbegriff des Anspruchs 1.

Eine bekannte Espressokaffeemaschine hat einen zylindrischen Brühkopf, der einen Siebeinsatz mit einem Boden aufweist, in dem eine Auslauföffnung angeordnet ist (DE 30 35 157 A1). Die Auslauföffnung bildet einen Ventilsitz für ein Rückschlagventil bzw. Druckventil mit einer Feder, die einen in die Auslauföffnung des Siebeinsatzes eingreifenden Ventilkegel trägt. Bei Kaffeegetränkebereitung mit einer solchen Espressomaschine ist das Rückschlagventil zunächst durch die Feder geschlossen, wodurch sich der Druck in dem Brühkopf Infolge des einlaufenden Brühwassers so lange erhöht, bis das Rückschlagventil öffnet und das Kaffeegetränk durch den Kaffeeauslauf in Kaffeetassen strömen kann, wobei sich auf der Oberfläche des Kaffeegetränks, Espresso, der gewünschte Kaffeeschaum bildet, der Crema bezeichnet wird. Das Rückschlagventil wird daher auch Cremaventil genannt.

Derartige Cremaventile weisen sonst meist eine federbelastete Kugel oder Kugelkopfanordnung auf und sind geeignet, in einer Brühkammer einen Druck von mindestens ca. 5 bar aufzubauen.

Während eine espresso-typische Crema ein Qualitätsmerkmal eines guten Espresso ist, wird eine Crema bei anderen Kaffeegetränkearten, die neuerdings mit derselben Espressokaffeemaschine zubereitet werden können wie der Espresso, nicht immer gewünscht. Dies gilt insbesondere für eine in größeren Portionen als Espresso gebrühten einfachen Kaffee, der auch als Morgenkaffee bezeichnet wird. Eine andere bekannte Kaffeegetränkeart, der sogenannte Schümlikaffee, hat wiederum idealerweise einen für diesen charakteristischen aufschwimmenden Schaum.

Es ist bereits eine Espressokaffeemaschine bekannt, mit der von dem Benutzer wählbare Kaffeegetränkearten bereitet werden können und die hierzu eine als Regelventileinrichtung ausgebildete Ventileinrichtung zwischen der Brühkammer und einem Getränkeauslass aufweisen, wobei durch den Benutzer beeinflussbare Mittel zum Verändern der pro Zeiteinheit durch die Ventileinrichtung strömenden Menge Kaffeegetränk vorgesehen sind (EP 1 133 944 B1). Die Ventileinrichtung weist hierzu einen relativ zu einem Ventilsitz verschiebbaren, mittels einer Feder belasteten Ventilkörper auf, bei der die Feder bestrebt ist, den Ventilkörper in einer Offenstellung zu halten und bei der der Ventilkörper von dem unter Druck stehenden Kaffeegetränk entgegen der Vorspannkraft der Feder in Schließstellung verschoben wird. Als Mittel zum Verändern der pro Zeiteinheit durch die Ventileinrichtung strömenden Kaffeegetränkmenge können Mittel zum Verändern der Vorspannkraft der Feder geeignet sein und/oder es kann der strömungstechnisch relevante Auslassquerschnitt einer Ventilkammer der Ventileinrichtung veränderbar sein. Diese Mittel zum Verändern der pro Zeiteinheit durch eine Regelventileinrichtung strömenden Kaffeegetränkemenge sind jedoch präzise zu fertigen, insbesondere wenn der Auslassquerschnitt der Regelventileinrichtung verändert werden soll. Eine langzeitige, konstante Wirkung ist fraglich, zumal die Durchlaufrate des durch das Kaffeepulver strömenden Brühwassers mit der Regeleinrichtung deswegen nicht auf einem absolut konstanten Wert gehalten werden kann, weil das Regelverhalten der Ventileinrichtung u.a. von der Viskosität der durchströmenden Flüssigkeit abhängt (Spalte 3, Zeile 56 - Spalte 4, Zeile 9). Nachteilig ist auch, dass die Regelventileinrichtung zwischen der Brüheinheit und dem Getränkeauslass ein ausreichendes Einbauvolumen in der Espressokaffeemaschine beansprucht.

Bei einer bekannten Espressokaffeemaschine nach dem Oberbegriff des Anspruchs 1 wird eine Brühkammer durch zwei gegeneinander bewegliche Teile gebildet, von denen eines als auf- und abschiebbarer Hohlzylinder geformt sein kann, in den ein feststehendes Teil mit einem extern verschließbaren weiten Kanal zu einer Getränkeabgabeleitung und mit einem engeren Kanal, in dem ein Drosselventil angeordnet ist und der ebenfalls zu der Getränkeabgabeleitung führt, hineinreicht (WO 2007/060694 A1). Ein Verschlusselement ist in einer Einstellung in dem extern verschließbaren Kanal abgesenkt, wodurch der Kanal geöffnet ist, der einen in der Brühkammer bereiteten Filterkaffee in ein Auffanggefäß leitet. Dabei ist das Drosselventil, das als federbelastetes Kugelventil ausgebildet ist, in dem engeren Kanal selbsttätig geschlossen. Das Verschlusselement kann durch Anlage des auf- und abschiebbaren Hohlzylinders geschlossen werden, wenn dessen Hub zur Espressozubereitung groß eingestellt wird. Bei letzterer Einstellung öffnet das Drosselventil in dem engeren Kanal, durch den in der Brühkammer bereiteter Espresso durch die Getränkeabgabeleitung stromabwärts des Verschlusselements in das Auffanggefäß geleitet wird. Der Öffnungsdruck des Drosselventils kann von dem Nutzer durch Einstellung der Federvorspannung vorgegeben werden.

Die WO 2011/45710 A1 offenbart eine Brüheinheit zum Kaffeebrühen mit einem überdrucklosen Kaffeegetränkebypasskanal strömungsmäßig parallel zu einem ersten Druckventil (Cremaventil). Der Kaffeegetränkebypasskanal kann zwischen der Brühkammer und dem Kaffeegetränkeauslauf gesperrt werden, um nach einem Brühvorgang einen Kaffeerückstand in der Brühkammer zu vermeiden. Hierzu soll der Kaffeegetränkebypasskanal durch Kopplung mit einem Deckel der Brüheinheit nach Abschluss eines Brühvorgangs aktiviert werden.

Demgemäß liegt der vorliegenden Erfindung die Aufgabe zugrunde, eine Espressokaffeemaschine der eingangs genannten Gattung zu schaffen, bei der mit unkomplizierten, einfach zu fertigenden Mitteln, die auch langzeitig zuverlässig funktionieren, eine von mehreren, wenigstens zwei Kaffeegetränkearten ausgewählte Kaffeegetränkeart mit hierauf abgestimmtem Schaum hergestellt werden kann, wobei als Kaffeegetränkearten zunächst von Espresso und einfachem Kaffee bzw. Morgenkaffee ausgegangen wird.

Die erfindungsgemäße Lösung, die auf einer Espressokaffeemaschine mit einem herkömmlichen federbelasteten Druckventil bzw. Cremaventil, welches öffnet, wenn der Brühkammerdruck einen ersten konstruktiv vorgegebenen Wert überschreitet, ausgeht, sieht im Prinzip einen praktisch überdrucklosen Kaffeegetränkebypasskanal vor, der strömungsmäßig parallel zu mindestens dem ersten Druckventil angeordnet ist und der zwischen der Brühkammer und einem Kaffeegetränkeauslauf abgesperrt werden kann. Eine solche Sperrung wird an einem kaffeegetränkeeinlaufseitigen Ende des Kaffeegetränkebypasskanals in der Espressokaffeemaschine bzw. Baueinheit nach den Ansprüchen 1 bis 4 durchgeführt werden.

Unter dem überdrucklosen Kaffeegetränkebypasskanal wird ein Kaffeegetränkebypasskanal verstanden, dessen Innendruck im Wesentlichen gleich dem Druck der den Kaffeegetränkebypasskanal an dessen auslaufseitigen Ende umgebenden Atmosphäre ist.

In der erfindungsgemäßen Ausführungsform der Espressokaffeemaschine nach Anspruch 1 sind der Kaffeegetränkebypasskanal und das erste Druckventil außerhalb der Brühkammer angeordnet, wobei zwischen einem Kaffeegetränkeeinlauf von der Brühkammer und dem Kaffeegetränkebypasskanal sowie dem ersten Druckventil ein Zwei-Wege-Ventil angeordnet ist, durch das der Kaffeegetränkebypasskanal in einer ersten Stellung gegenüber dem Kaffeegetränkeeinlauf absperrbar ist, wodurch ein Kaffeegetränk nur noch über das Druckventil bei dieses öffnendem Druck in der Brühkammer über einen Kaffeegetränkeauslauf auslaufen kann. Hingegen ist das erste Druckventil in einer zweiten Stellung des Zwei-Wege-Ventils gegenüber dem Kaffeegetränkeeinlauf abgesperrt, aber der Kaffeegetränkebypasskanal kann überdrucklos Kaffeegetränk von dem Kaffeegetränkeeinlauf in den Kaffeegetränkeauslauf leiten. In dem ersten obigen Fall ist Espresso mit Cremabildung aus dem Kaffeegetränkeauslauf entnehmbar, in dem zweiten Fall einfacher Morgenkaffee ohne Schaum.

Der Kaffeegetränkebypasskanal, das erste Druckventil und das Zwei-Wege-Ventil können nach Anspruch 2 endmontagegünstig zu einer Baueinheit in einem Gehäuse zusammengefasst sein.

Das Zwei-Wege-Ventil kann nach Anspruch 3 konstruktiv einfach eine verschiebbare Ventilhülse umfassen, die auf der Seite des Kaffeegetränkeeinlaufs einen Ventilhülseneinlass aufweist und auf der Seite des Getränkebypasskanals sowie des ersten Druckventils einen Ventilhülsenauslass, wobei sich der Ventilhülseneinlass über den Verschiebeweg der Ventilhülse erstreckt und wobei sich der Ventilhülsenauslass nur über einen Abschnitt des Verschiebewegs in der ersten Ventilhülsenstellung über einen Druckventileinlass oder in der zweiten Ventilhülsenstellung über einen Bypasskanaleinlass erstreckt.

Nach Anspruch 4 kann das Zwei-Wege-Ventil besonders zweckmäßig als Magnetventil ausgebildet sein, um die Ventilhülse einzustellen.

In der Espressokaffeemaschine kann das erste Druckventil nach Anspruch 5 als federbelastetes Kugelventil ausgebildet sein.

Eine Ausführungsform einer Brüheinheit einer Espressomaschine sowie als zweite Ausführungsform eine Baueinheit einer Ventileinrichtung einer Espressomaschine nach Anspruch 1 werden im Folgenden anhand einer Zeichnung mit fünf Figuren beschrieben, aus denen sich weitere Einzelheiten ergeben. Es zeigen:
- Fig. 1: die nicht erfindungsgemässe Ausführungsform einer Brüheinheit, welche die Zubereitung eines Espresso mit Cremabildung oder eines Schümlikaffees mit aufschwimmendem Schaum oder eines schaum- und cremafreien Kaffees gestattet, geschnitten in einer drucklosen Ausgangsstellung,
- Fig. 2: die Brüheinheit gemäß Fig. 1 in einer Stellung zur Zubereitung eines Espresso mit Cremabildung,
- Fig. 3: die Brüheinheit gemäß Fig. 1 in einer Stellung zur Bereitung von Schümlikaffee mit aufschwimmendem Schaum,
- Fig. 4: die Brüheinheit gemäß Fig. 1 in einer Stellung zur Zubereitung eines schaum- und cremafreien Kaffees bzw. Morgenkaffees
- Fig. 5: die erfindungsgemässe Ausführungsform eine Baueinheit einer Ventileinrichtung in einem Schnitt, die an eine ventillose nicht dargestellte Brüheinheit angeschlossen werden kann, in einer Stellung zur Zubereitung eines Espresso mit Cremabildung.

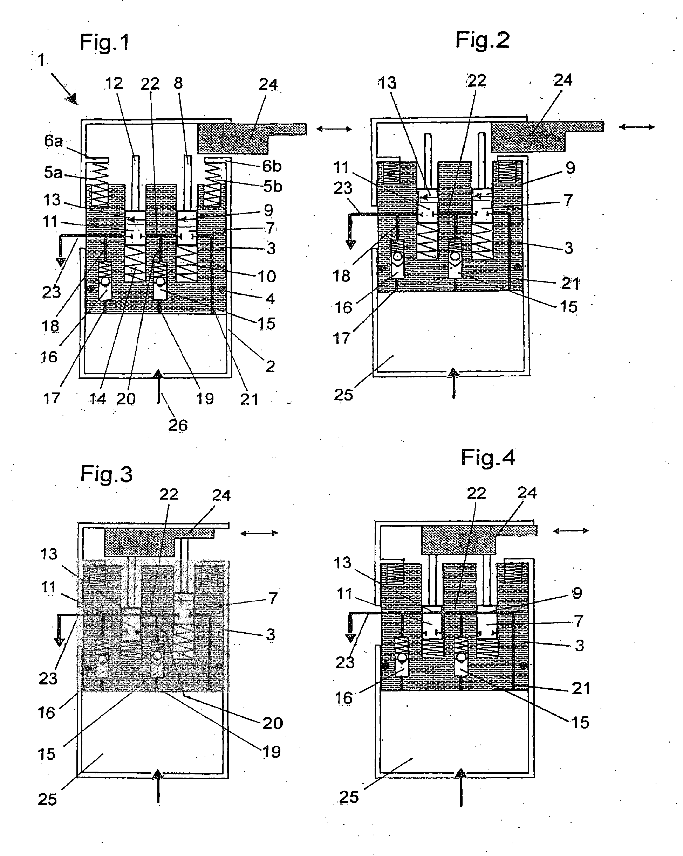

Die Brüheinheit 1 gemäß den Fig. 1 - 4 umfasst in einem Brühkammergehäuse 2 eine Brühkammer 25 mit einem in ihr verschiebbaren Brühkolben 3. Eine Verschiebung des Brühkolbens 3 kann durch Zusammenfahren der Brüheinheit nach Aufnahme von Kaffeepulver sowie durch Einwirkung des Brühwasserdrucks in der Brühkammer 2 entgegen der Druckkraft von Rückstellfedern 5a und 5b erfolgen, die sich an jeweils einer Rückstellfederauflage 6a bzw. 6b des Brühkammergehäuses 2 abstützen, wie am besten in Fig. 1 für die drucklose Ausgangsstellung sichtbar.

In dem Brühkolben 3 sind ein erster Ventilkolben 7 und ein zweiter Ventilkolben 11 verschiebbar angeordnet, die mittels jeweils einer Rückstellfeder 10, 14 in ihrer Ausgangsstellung gehalten werden, siehe Fig. 1 und 2. Entgegen der Kraft der Federn 14, 15 können die Ventilkolben 7, 11 mittels je eines Ventilkolbenstößels 8 bzw. 12 nach Maßgabe einer Vorwahlkulisse 24 verschoben werden. Die Vorwahlkulisse 24 kann von Hand oder programmiert elektromagnetisch oder elektromotorisch mit Getriebe positioniert, d.h. in Richtung des nicht bezeichneten Doppelpfeils, verschoben werden.

In den Ventilkolben 7, 11 sind Ventilkolbenkanäle bzw. Fließkanäle 9, 13 angeordnet, die je nach Position der Ventilkolben 7, 11 einen Durchfluss für an die Ventilkolben angeschlossene Kanäle freigeben bzw. jeweils einen Eingang des mit dem Ventilkolben 7 bzw. 11 versehenen Kolbenventils mit dessen Ausgang verbinden. Insbesondere ist mit einem Eingang zu dem ersten Ventilkolben 7 ein Kaffeegetränkebypasskanal 21 verbunden, der überdrucklos geschaltet werden kann, wenn er über die Ventilkolben 7 und 11 mit einem Kaffeegetränkeauslaufkanal 23 verbunden ist, welcher in die äußere Atmosphäre führt. Ein Verbindungskanal 22 verbindet einen Ausgang von dem ersten Ventilkolben 7 zu einem Eingang zu dem zweiten Ventilkolben 11, dessen Ausgang mit dem Kaffeegetränkeauslaufkanal 23 verbunden ist. Wie aus den Figuren 1 bis 4 ersichtlich, sind der Verbindungskanal 22 und zu diesem benachbarte Abschnitte des Kaffeegetränkebypasskanals 21 und des Kaffeegetränkeauslaufkanals 23 in dem Brühkolben 3 fluchtend angeordnet.

In dem Brühkolben 3 sind weiterhin die als Kugelventile ausgebildeten federbelasteten Druckventile 15,16 in der Art von Überdruckventilen zu der Brühkammer 25 angeordnet. Hierzu verbindet jeweils ein Einlaufkanal 17 bzw. 19 die Brühkammer 25 mit den Druckventilen 16 bzw. dem Druckventil 15. Ein Auslaufkanal 18 verbindet einen Ausgang des Druckventils 16 mit dem Kaffeegetränkeauslaufkanal 23. Hingegen verbindet ein Auslaufkanal 20 das Druckventil 15 mit dem Verbindungskanal 22.

Die nicht bezeichnete Feder des Druckventils 16 öffnet dieses bei einem relativ hohen Flüssigkeitsdruck in der Brühkammer 25 entsprechend einem Cremaventil und wird in dieser Anmeldung auch als erstes Druckventil bezeichnet. Das erste Druckventil 16 öffnet bei einem so hohen Druck in der Brühkammer 25, dass bei dem Ausströmen des in der Brühkammer 25 bereiteten Espressocrema gebildet wird, wie weiter unten im Blick auf Fig. 3 gezeigt wird. Hingegen öffnet eine Feder in dem Druckventil 15 bereits bei einem niedrigeren Druck in der Brühkammer 25 zur Zubereitung von Schümlikaffee mit aufschwimmendem Schaum.

In Figur 1 ist zunächst die Brüheinheit 1 mit der Brühkammer 25 in der Ausgangsstellung des Brühkolbens 3 und der Vorwahlkulisse 24 dargestellt, bei der in der Brühkammer 25 kein Überdruck herrscht. Die Vorwahlkulisse nimmt eine Stellung ein, in der das erste Druckventil 16 und das zweite Druckventil 15 nicht betätigt sind, d.h. geschlossen sind. Die Einlaufkanäle 17 und 19 der Druckventile 16 und 15 sind nicht mit dem Flüssigkeitsauslaufkanal 23 bzw. dem Verbindungskanal 22 verbunden.

In Fig. 2 ist die Brüheinheit mit unter Brühdruck stehender Brühkammer 25 dargestellt. Dementsprechend ist der Brühkolben 3 entgegen der Kraft der Rückstellfedern 5a, 5b nach oben hochgedrückt, was aber die Ventilkolben 7, 11 nicht verschiebt, da die Ventilkolbenstößel 8 und 9 von der Vorwahlkulisse 24 in deren Ausgangsstellung nicht abgesenkt werden.

Wenn der Brühdruck in der Brühkammer 25 hoch genug angestiegen ist, öffnet zunächst das zweite Druckventil 15, wodurch aber kein Kaffeegetränk in den Kaffeegetränkeauslaufkanal 23 gelangt, weil das Druckventil 15 durch den Ventilkolben 11 gegenüber dem Kaffeegetränkeauslasskanal 23 abgesperrt ist. Sodann öffnet bei weiter in der Brühkammer 25 ansteigendem Druck das erste Druckventil 16, wodurch der zubereitete Espresso in den Kaffeegetränkeauslaufkanal 23 strömt, aus dem der Espresso mit Cremabildung ausläuft.

In der Situation gemäß Fig. 3 herrscht in der Brühkammer 25 Überdruck, der mindestens so groß ist wie der Druck, bei dem das zweite Druckventil 15 öffnet. Durch Verschiebung der Vorwahlkulisse 24 ist diese so positioniert, dass der Ventilkolben 7 sich nach wie vor in seiner Ausgangsstellung befindet, jedoch der Ventilkolben 11 in geöffneter, aktiver Position abgenkt, so dass der Verbindungskanal 22 über den Ventilkolbenkanal 13 zu dem Kaffeegetränkeauslasskanal 23 durchgeschaltet ist. Demzufolge kann das in der Brühkammer 25 bereitete Kaffeegetränk durch das bereits bei relativ niedrigem Brühwasserdruck öffnende Druckventil 15 über dessen Auslaufkanal 20 und den Verbindungskanal 22 in den Kaffeegetränkeauslaufkanal 23 ablaufen, ohne dass das zweite Druckventil 16, welches ein relatives Hochdruckventil ist, öffnet. Es erfolgt eine Schümlikaffeezubereitung mit aufschwimmendem Schaum.

In der in Fig. 4 dargestellten Situation steht die Brühkammer 25 der Brüheinheit unter ausreichendem Brühwasserdruck zur Zubereitung eines Kaffeegetränks, nämlich Morgenkaffee. Hierzu ist die Vorwahlkulisse 24 so verschoben bzw. positioniert, dass beide Ventilkolben 7, 11 sich in aktiver abgenkter Position befinden, d.h. mit ihren Ventilkolbenkanälen 9 und 13 durchgeschaltet sind. Demzufolge steht die Brühkammer 25 über den Kaffeegetränkebypasskanal 21, den Ventilkolbenkanal 9, den Verbindungskanal 22 und dem Ventilkolbenkanal 13 mit dem Kaffeegetränkeauslaufkanal 23 in Verbindung, so dass der Druck in der Brühkammer niedrig ist. Der in der Brühkammer zubereitete Morgenkaffee kann über die genannten Kanäle praktisch drucklos ablaufen. Die beiden Druckventile 15, 16 bleiben geschlossen, da ein sie öffnender Druck in der Brühkammer nicht erreicht wird. Es wird Morgenkaffee ohne Crema und ohne Schaum bereitet.

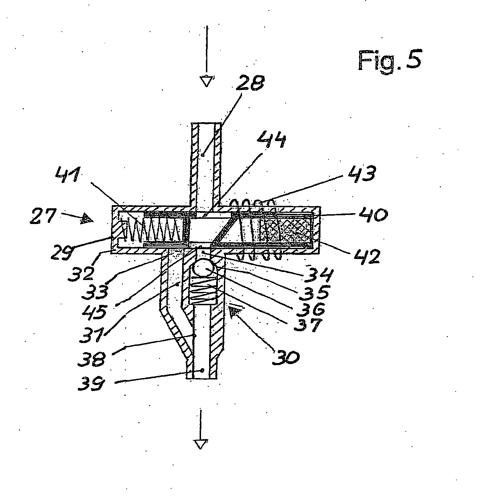

Die Ausführungsform der Erfindung gemäß Figur 5 stellt eine Baueinheit 27 dar, die außerhalb einer nicht dargestellten Brüheinheit angeordnet wird, die weitgehend beliebig in bekannter Weise ausgebildet sein kann.

Die kompakte Baueinheit umfasst einen Kaffeegetränkeeinlauf 28, aus dem ein Kaffeegetränk, welches in der Brüheinheit zubereitet wird, in die Baueinheit 27 einfließen kann, ein an den Kaffeegetränkeeinlauf 28 angeschlossenes Zwei-Wege-Ventil 29, ein Druckventil 30 und einen Kaffeegetränkebypasskanal 31. Diese Komponenten der Baueinheit werden von einem entsprechend geformten Gehäuse 32 eingeschlossen.

In dem Gehäuse 32 ist an einem nicht bezeichneten Auslass des Zwei-Wege-Ventils 29 ein Bypasseinlass 33 des Kaffeegetränkebypasskanals 31 angeordnet und an einem zweiten Auslass des Zwei-Wege-Ventils 29 ein Druckventileinlass 34. Das Druckventil 30 ist in der Art eines Cremaventils mit einem Ventilsitz 35 ausgebildet, gegen den eine Ventilkugel 36 durch eine Ventilfeder 37 derart gedrückt wird, dass das Druckventil 30 erst bei Überschreiten eines vorbestimmten Drucks an dem Druckventileinlass 34 einen Strömungsweg in dem Druckventil 30 öffnet. Wie in Figur 5 dargestellt, mündet ein Bypassauslass 38 in einen Kaffeegetränkeauslauf 39 strömungstechnisch im Anschluss an das Druckventil 30, welches ebenfalls in den Kaffeegetränkeauslauf 39 mündet.

Das quer zu dem Kaffeegetränkeeinlauf 28 und dem Kaffeegetränkeauslauf 39 angeordnete Zwei-Wege-Ventil 29 beinhaltet eine in ihr verschiebbare Ventilhülse 40, die unter Kraft einer Ventilhülsenfeder 41 in die in Figur 5 dargestellte rechte Endstellung gedrückt wird. Die Ventilhülse umfasst einen Eisenkern 42, der zusammen mit einer Erregerspule 43 und den oben beschriebenen Teilen des Zwei-Wege-Ventils 29 ein Magnetventil bildet.

Die Ventilhülse 40 weist einen oberen Ventilhülseneinlass 44 sowie einen kleineren Ventilhülsenauslass 45 auf, der, je nach der Endstellung der Ventilhülse, mit dem Druckventileinlass 34 kommuniziert oder mit dem Bypasseinlass 33. Wie aus Fig. 5 ersichtlich erstreckt sich der Ventilhülseneinlass 44 so weit über den Verschiebeweg bzw. in Längsrichtung des Zwei-Wege-Ventils 29, dass der Ventilhülsenauslass 45 in jeder Zwei-Wege-Ventilstellung kommuniziert. Der Ventilhülsenauslass 45 verbindet somit den Kaffeegetränkeeinlauf 28 je nach Stellung des Zwei-Wege-Ventils 29 entweder mit dem Druckventil 30 oder mit dem Kaffeegetränkebypasskanal 31.

In der in Fig. 5 gezeigten Ruhestellung des Zwei-Wege-Ventils 29 ist der Kaf feegetränkeeinlauf und damit das Innere der Brühkammer mit dem Druckventil 30 verbunden, so dass das in der Brühkammer erzeugte Kaffeegetränk als Espresso mit Cremabildung aus dem Kaffeegetränkeauslauf 39 ausläuft. Bei Erregung der Erregerspule 43 wird hingegen das Zwei-Wege-Ventil in seine andere Endstellung umgeschaltet, so dass das Innere der Brühkammer mit dem Kaffeegetränkebypasskanal 31 in Verbindung steht, und infolge des niedrigen Drucks in der Brühkammer einfacher Kaffee, sogenannter Morgenkaffee, ohne Schaum oder Crema zubereitet wird.

### Bezugszahlenliste

- 1: Brüheinheit
- 2: Brühkammergehäuse
- 3: Brühkolben
- 4: Dichtung
- 5a: Rückstellfeder
- 5b: Rückstellfeder
- 6a: Rückstellfederauflage
- 6b: Rückstellfederauflage
- 7: Ventilkolben
- 8: Ventilkolbenstößel
- 9: Ventilkolbenkanal
- 10: Rückstellfeder
- 11: Ventilkolben
- 12: Ventilkolbenstößel
- 13: Ventilkolbenkanal
- 14: Rückstellfeder
- 15: zweites Druckventil (Niederdruck)
- 16: erstes Druckventil (Hochdruck)
- 17: Einlaufkanal
- 18: Auslaufkanal
- 19: Einlaufkanal
- 20: Auslaufkanal
- 21: Kaffeegetränkebypasskanal
- 22: Verbindungskanal
- 23: Kaffeegetränkeauslaufkanal
- 24: Vorwahlkulisse
- 25: Brühkammer
- 26: Brühwassereinlauf
- 27: Baueinheit
- 28: Kaffeegetränkeinlauf
- 29: Zwei-Wege-Ventil
- 30: Druckventil
- 31: Kaffeegetränkebypasskanal
- 32: Gehäuse
- 33: Bypasskanaleinlass
- 34: Druckventileinlass
- 35: Ventilsitz
- 36: Ventilkugel
- 37: Ventilfeder
- 38: Bypasskanalauslass
- 39: Kaffeegetränkeauslauf
- 40: Ventilhülse
- 41: Ventilhülsenfeder
- 42: ferromagnetischer Kern
- 43: Erregerspule
- 44: Ventilhülseneinlass
- 45: Ventilhülsenauslass

## Patentansprüche

1. Espressokaffeemaschine mit einer Brüheinheit, die eine Brühkammer und mindestens ein erstes federbelastetes Druckventil (30) umfasst, welches strömungstechnisch zwischen der Brühkammer und einem Kaffeegetränkeauslauf angeordnet ist und welches öffnet, wenn der Brühkammerdruck einen ersten konstruktiv vorgegebenen Wert überschreitet,
wobei ein überdruckloser Kaffeegetränkebypasskanal (31) strömungsmäßig parallel zu mindestens dem ersten Druckventil (30) angeordnet ist und zwischen der Brühkammer und dem Kaffeegetränkeauslauf (39) sperrbar ist,
**dadurch gekennzeichnet,**
**dass** der Kaffeegetränkebypasskanal (31) und das erste Druckventil (30) außerhalb der Brühkammer angeordnet sind und
**dass** zwischen einem Kaffeegetränkeeinlauf (28) von der Brühkammer und dem Kaffeegetränkebypasskanal (31) sowie dem ersten Druckventil (30) ein Zwei-Wege-Ventil (29) angeordnet ist, durch das in einer ersten Stellung der Kaffeegetränkebypasskanal (31) absperrbar ist und in einer zweiten Stellung das erste Druckventil (30) absperrbar ist.

2. Espressokaffeemaschine nach Anspruch 1,
**dadurch gekennzeichnet,**
**dass** der Kaffeegetränkebypasskanal (31), das erste Druckventil (30) und das Zwei-Wege-Ventil (29) zu einer Baueinheit in einem Gehäuse (32) zusammengefasst sind.

3. Espressokaffeemaschine nach Anspruch 1 oder 2,
**dadurch gekennzeichnet,**
**dass** das Zwei-Wege-Ventil (29) eine verschiebbare Ventilhülse (40) umfasst, die auf der Seite des Kaffeegetränkeeinlaufs (28) einen Ventilhülseneinlass (44) aufweist und auf der Seite des Kaffeegetränkebypasskanals (31) sowie des ersten Druckventils (30) einen Ventilhülsenauslass (45) aufweist,
**dass** sich der Ventilhülseneinlass (44) über den Verschiebeweg der Ventilhülse (40) erstreckt und
**dass** sich der Ventilhülsenauslass (45) nur über einen Abschnitt des Verschiebewegs in der ersten Ventilhülsenstellung über einen Druckventileinlass (34) oder in der zweiten Ventilhülsenstellung über einen Bypasskanaleinlass (33) erstreckt.

4. Espressokaffeemaschine nach einem der Ansprüche 1-3,
**dadurch gekennzeichnet,**
**dass** das Zwei-Wege-Ventil (29) als Magnetventil ausgebildet ist.

5. Espressokaffeemaschine nach einem der vorangehenden Ansprüche,
**dadurch gekennzeichnet,**
**dass** das erste Druckventil (30) als federbelastetes Kugelventil ausgebildet ist.

## Claims

1. Espresso coffee machine with a brewing unit, comprising a brewing chamber and at least one first spring-loaded pressure relief valve (30) which is arranged in a fluidic manner between the brewing chamber and a coffee beverage outlet, and which opens when the brewing chamber pressure exceeds a first constructionally predetermined value,
wherein an unpressurised coffee beverage bypass channel (31) is arranged parallel, with respect to the flow, to at least the first pressure relief valve (30) and can be shut off between the brewing chamber and the coffee beverage outlet (39),
**characterised in that**
the coffee beverage bypass channel (31) and the first pressure relief valve (30) are arranged outside the brewing chamber, and **in that**
a two-way valve (29) is arranged between a coffee beverage inlet (28) of the brewing chamber and a coffee beverage bypass channel (31) and first pressure relief valve (30), by means of which two-way valve (29) the coffee beverage bypass channel (31) can be shut off in a first position and the first pressure relief valve (30) can be shut off in a second position.

2. Espresso coffee machine according to claim 1,
**characterised in that**
the coffee beverage bypass channel (31), the first pressure relief valve (30) and the two-way valve (29) are integrated into one unit in a housing (32).

3. Espresso coffee machine according to either claim 1 or claim 2,
**characterised in that**
the two-way valve (29) comprises a movable valve sleeve (40) which has a valve sleeve inlet (44) on the side of the coffee beverage inlet (28), and a valve sleeve outlet (45) on the side of the coffee beverage bypass channel (31) and the first pressure relief valve (30)
and **in that** the valve sleeve inlet (44) extends over the movement path of the valve sleeve (40)
and **in that** the valve sleeve outlet (45) only extends over a portion of the movement path - over a pressure relief valve inlet (34) in the first valve sleeve position or over a bypass channel inlet (33) in the second valve sleeve position.

4. Espresso coffee machine according to any of claims 1 to 3,
**characterised in that**
the two-way valve (29) is constructed as a solenoid valve.

5. Espresso coffee machine according to any of the preceding claims,
**characterised in that**
the first pressure relief valve (30) is constructed as a spring-loaded ball valve.

## Revendications

1. Machine à café expresso avec une unité d'infusion, qui comprend une chambre d'infusion et au moins une première soupape de surpression à ressort (30), laquelle est disposée techniquement dans le flux entre la chambre d'infusion et une sortie de boisson à base de café et laquelle s'ouvre lorsque la pression de la chambre d'infusion dépasse une première valeur imposée par la construction,
un canal de dérivation (31) de boisson à base de café sans surpression étant disposé dans le sens d'écoulement parallèlement par rapport à au moins la première soupape de surpression (30) et pouvant être bloqué entre la chambre d'infusion et la sortie de boisson à base de café (39),
**caractérisée en ce**
**que** le canal de dérivation (31) de boisson à base de café et la première soupape de surpression (30) sont disposés en dehors de la chambre d'infusion, et
**qu'**une soupape à deux voies (29) est disposée entre une entrée de boisson à base de café (28) de la chambre d'infusion et le canal de dérivation (31) de boisson à base de café, ainsi qu'entre l'entrée de boisson et la première soupape de surpression (30), grâce à laquelle le canal de dérivation (31) de boisson à base de café peut être bloqué dans une première position et la première soupape de surpression (30) peut être bloquée dans une deuxième position.

2. Machine à café expresso selon la revendication 1,
**caractérisée en ce**
**que** le canal de dérivation (31) de boisson à base de café, la première soupape de surpression (30) et la soupape à deux voies (29) sont rassemblés sous la forme d'un ensemble dans un carter (32).

3. Machine à café expresso selon les revendications 1 ou 2,
**caractérisée en ce**
**que** la soupape à deux voies (29) comprend un manchon de soupape (40) coulissant qui présente une entrée de manchon de soupape (44) du côté de l'entrée de boisson à base de café (28) et présente une sortie de manchon de soupape (45) du côté du canal de dérivation (31) de boisson à base de café, ainsi que du côté de la première soupape de pression (30),
**que** l'entrée de manchon de soupape (44) s'étend le long du trajet de coulissement du manchon de soupape (40) et
**que** la sortie de manchon de soupape (45) s'étend uniquement sur une portion du trajet de coulissement au niveau d'une entrée de soupape de surpression (34) dans la première position du manchon de soupape ou au niveau de l'entrée de canal de dérivation (33) dans la deuxième position du manchon de soupape.

4. Machine à café expresso selon l'une des revendications 1 à 3,
**caractérisée en ce**
**que** la soupape à deux voies (29) est conçue sous la forme d'une électrovanne.

5. Machine à café expresso selon l'une quelconque des revendications précédentes,
**caractérisée en ce**
**que** la première soupape de surpression (30) est conçue sous la forme d'une soupape à bille à ressort.
